(19) Europäisches Patentamt
European Patent Office
Office européen des brevets

(11) Veröffentlichungsnummer: **0 048 429**
**B1**

(12) **EUROPÄISCHE PATENTSCHRIFT**

(45) Veröffentlichungstag der Patentschrift: **01.08.84**

(51) Int. Cl.³: **C 09 K 5/00**

(21) Anmeldenummer: **81107255.2**

(22) Anmeldetag: **15.09.81**

(54) **Korrosionsinhibierende und kavitationsinhibierende Kühlflüssigkeit.**

(30) Priorität: **19.09.80 DE 3035327**

(43) Veröffentlichungstag der Anmeldung: **31.03.82 Patentblatt 82/13**

(45) Bekanntmachung des Hinweises auf die Patenterteilung: **01.08.84 Patentblatt 84/31**

(84) Benannte Vertragsstaaten: **AT BE CH DE FR GB IT LI NL SE**

(56) Entgegenhaltungen:
**DE-A-2 055 779**
**FR-A-2 236 018**
**FR-A-2 249 181**

(73) Patentinhaber: **HOECHST AKTIENGESELLSCHAFT, Postfach 80 03 20, D-6230 Frankfurt am Main 80 (DE)**

(72) Erfinder: **Peters, Heinrich, Dr., Robert-Koch-Strasse 201, D-8263 Burghausen/Salzach (DE)**
Erfinder: **Surma, Erich, Hütweg 49, D-8261 Garching/Alz (DE)**

**EP 0 048 429 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine korrosionsinhibierende und kavitationsinhibierende Kühlflüssigkeit aus mindestens einem mehrwertigen Alkohol aus der Gruppe von Glycerin, Alkylenglykolen mit 2 bis 6 C-Atomen und Oxalkylenglykolen des Oxethylens und/oder Oxpropylens mit insgesamt 4 bis 12 C-Atomen als Hauptbestandteil und aus mindestens einem korrosionsinhibitor und mindestens einem Kavitationsinhibitor in einer jeweils wirksamen Menge.

Zum Kühlen von technischen Einrichtungen wie Wärmekraftmaschinen, Pumpen und dergleichen werden im allgemeinen Wasser und im Falle von Frostgefahr mehrwertige Alkohole wie Ethylenglykol, Propylenglykol und Glycerin oder Mischungen von Wasser und mehrwertigen Alkoholen eingesetzt. Zur Erreichung einer optimalen Funktion werden verschiedene Hilfsmittel in wirksamer Menge, vorzugsweise korrosions- und kavitationshemmende Verbindungen, gegebenenfalls auch pH-Wert-Stabilisatoren und Antischaummittel, zugesetzt. Die Kühlflüssigkeiten sollen nämlich einerseits eine gute Kühlwirkung liefern und andererseits keine Schädigung an dem in der Regel aus metallischen Werkstoffen bestehenden Kühlsystem hervorrufen, insbesondere keine Schädigung durch Korrosion und Kavitation.

Während die Schädigung des Werkstoffes durch Korrosion auf einem rein chemischen Angriff des Werkstoffes beruht, spielen bei der Kavitation auch physikalische Erscheinungen eine wesentliche Rolle. Die Kavitationsschädigung zeigt sich im allgemeinen in Form von Aushöhlung oder Hohlraumbildung, wobei die Oberfläche des Werkstoffes aufgerauht und schwammartig zerstört wird.

Aus den deutschen Patentschriften 1 239 137, 1 239 138 und 1 263 398 sind Kühlflüssigkeiten für Verbrennungsmotoren bekannt, die im wesentlichen aus a) Wasser und/oder Alkylenglykolen (Frostschutzmittel) als Hauptbestandteil, b) einer wirksamen Menge von üblichen Antikorrosionsmitteln und c) einer wirksamen Menge von kavitationshemmende Verbindungen bestehen. Als kavitationshemmende Verbindungen werden höhere Alkohole, vorzugsweise einwertige und zweiwertige Alkohole mit 6 bis 20 Kohlenstoffatomen, Polyvinylpyrrolidon mit einem mittleren Molekulargewicht von 300 000 bis 1 000 000 und Umsetzungsprodukte von aktive Wasserstoffatome tragenden organischen Verbindungen mit einem Alkylenoxid, vorzugsweise Oxalkylenglykole, eingesetzt. Diese Kühlflüssigkeiten weisen eine zufriedenstellende Korrosionsinhibierung auf. Die verwendeten Korrosionsinhibitoren sind mit der Hauptkomponente verträglich, und sie geben auch einen relativ guten Korrosionsschutz. Dagegen lassen aber das Verhalten und die Wirkung der kavitationshemmenden Verbindungen zu wünschen übrig.

Kavitationshemmende Substanzen sollen vor allem einen sehr guten Schutz gegen Kavitation liefern, und zwar unabhängig von der Art des metallischen Werkstoffes. In neuerer Zeit werden insbesondere die Automobilmotoren zunehmend aus leichtmetall, vorzugsweise aus Aluminium oder Aluminiumlegierungen, hergestellt. Leichtmetalle sind aber weit mehr kavitationsgefährdet als Schwermetalle, beispielsweise Grauguss. Kavitationshemmende Substanzen müssen daher insbesondere auch gegenüber Leichtmetallen wirksam sein. Darüber hinaus sollten sie auch noch eine Reihe weiterer Forderungen erfüllen. Darunter sind insbesondere zu nennen: genügende Löslichkeit in Wasser und in ein- und mehrwertigen Alkoholen, vorzugsweise Glycerin, Alkylenglykolen und Oxalkylenglykolen; Verträglichkeit mit den verwendeten Korrosionsinhibitoren; keine oder keine nennenswerte Entmischungsneigung sowohl bei tiefen als auch bei höheren Temperaturen; keine oder keine nennenswerte Neigung zur Schaumbildung; und Inertheit gegenüber Kunststoffen, vorzugsweise gegenüber Elastomeren.

Aus den beiden französischen Patentschriften 2 236 018 und 2 249 181 sind Verbindungen der nachstehenden allgemeinen Formel bekannt,

$$R_1\text{-}SO_2\text{-}\underset{\displaystyle R}{\overset{}{N}}\text{-}CH_2\text{-}COOM \quad (\text{R an N})$$

in der R für Wasserstoff oder eine Alkylgruppe mit 1 bis 3 C-Atomen, $R_1$ für eine Alkylgruppe mit 14 bis 20 C-Atomen bzw. für eine Alkyl-Aryl-Gruppe aus einem Benzolkern und 14 bis 20 C-Atomen in der Alkylgruppe und M für Wasserstoff, Alkalimetall oder Ammonium steht. Im einzelnen wird in den beiden französischen Patentschriften eine korrosionsinhibierende Kühlflüssigkeit für nichtgeschlossene Kühlkreissysteme beschrieben, die im wesentlichen aus Wasser als Hauptbestandteil und aus mindestens einer der genannten Sulfamidoverbindungen in Kombination mit einem Mineralöl als antikorrosive Komponente besteht. Diese Flüssigkeit wirkt erst dann korrosionsinhibierend, wenn die Metallfläche, mit der sie beim bestimmungsgemässen Gebrauch in Berührung kommt, vorher passiviert oder phosphatiert worden ist. Wegen der Verwendung von Öl als Mischungskomponente ist diese Kühlflüssigkeit nicht homogen und besitzt die damit zusammenhängenden Nachteile.

Die Aufgabe der Erfindung besteht nun darin, eine korrosionsinhibierende und kavitationsinhibierende Kühlflüssigkeit, insbesondere für Verbrennungsmotoren, zu schaffen, die einen hervorragenden Korrosions- und Kavitationsschutz auch gegenüber Leichtmetallen, vorzugsweise Aluminium und Aluminiumlegierungen, ohne eine Vorbehandlung gewährleistet, die stabil ist, dass heisst eine homogene Flüssigkeit sowohl bei tiefen als auch bei hohen Temperaturen darstellt, nicht nennenswert schäumt und leicht zu handhaben ist.

Diese Aufgabe wird bei der eingangs genannten Kühlflüssigkeit dadurch gelöst, dass der Korrosionsinhibitor eine Verbindung aus der Gruppe der Alkaliborate, Alkalibenzoate, Alkalinitrite, Alkalinitrate, Alkalisilicate, Alkaliphosphate, Benztriazole und Alkanolamine und deren Salze ist und der Kavitationsinhibitor eine Verbindung der Formel I

$$R\text{-}SO_2\text{-}\underset{\displaystyle R_1}{\underset{|}{N}}\text{-}(CH_2)_x\text{-}COOM$$

worin bedeuten:

R einen Alkyl- oder Alkenylrest mit 4 bis 25 C-Atomen oder einen Arylrest mit 6 bis 10 C-Atomen,

$R_1$ Wasserstoff oder einen Alkylrest mit 1 bis 4 C-Atomen,

M Wasserstoff oder ein Alkalimetall, und

x eine ganze Zahl von 1 bis 5;

oder der Formel II

$$R_2\text{-}SO_2\text{-}N\left\langle\begin{matrix}(OR_3)_nH\\ R_4\end{matrix}\right.$$

worin bedeuten

$R_2$ einen Alkyl- oder Alkenylrest mit 4 bis 25 C-Atomen,

$R_3$ einen Alkylenrest mit 2 bis 4 C-Atomen,

n eine ganze Zahl von 1 bis 10,

$R_4$ Wasserstoff, einen Alkylrest mit 1 bis 4 C-Atomen oder einen Rest $-(OR_5)_mH$, worin $R_5$ ein Alkylenrest mit 2 bis 4 C-Atomen und m eine ganze Zahl von 1 bis 10 ist,

wobei die Menge an Korrosionsinhibitor 2 bis 10 Gew.-% und die Menge an Kavitationsinhibitor 0,01 bis 3,0 Gew.-% beträgt, Gewichtsprozente jeweils bezogen auf das Gewicht der Flüssigkeit.

In Formel I bedeuten

R vorzugsweise einen Alkylrest mit 8 bis 20 C-Atomen insbesondere mit 12 bis 18 C-Atomen, oder einen Arylrest aus der Gruppe von Phenyl, Benzyl, Phenethyl und Tolyl, insbesondere Phenyl,

$R_1$ vorzugsweise Wasserstoff oder einen Alkylrest mit 1 bis 3 C-Atomen, insbesondere Wasserstoff oder den Methylrest, und

M vorzugsweise Wasserstoff, Natrium oder Kalium.

In Formel II bedeuten

$R_2$ vorzugsweise einen Alkylrest mit 8 bis 20 C-Atomen, insbesondere mit 12 bis 18 C-Atomen,

$R_3$ vorzugsweise einen Ethylen- und/oder Propylenrest, insbesondere den Ethylenrest,

n vorzugsweise eine ganze Zahl von 2 bis 5,

$R_4$ vorzugsweise Wasserstoff, einen Alkylrest mit 1 bis 3 C-Atomen, insbesondere Wasserstoff oder $-CH_3$, oder einen Rest $-(OR_5)_mH$, worin $R_5$ ein Ethylen- und/oder Propylenrest, insbesondere der Ethylenrest, und m eine ganze Zahl von 2 bis 5 ist.

Die Summe von n und m beträgt im allgemeinen 4 bis 20, vorzugsweise 4 bis 10.

In Formel I und II können die Alkyl- und Alkenylreste geradkettig oder verzweigt sein, sie sind vorzugsweise geradkettig. Von den Alkenylresten sind diejenigen mit 1 bis 2 Doppelbindungen bevorzugt.

Vorteilhafte Vertreter von R und $R_2$ sind beispielsweise: Decyl, Undecyl, Dodecyl, Tridecyl, Tetradecyl, Pentadecyl, Hexadecyl, Heptadecyl und Stearyl oder Gemische davon, vorzugsweise solche mit $C_{12}$- bis $C_{18}$-Alkylresten. Da bei der Herstellung von Verbindungen gemäss Formel I und II auch von Kohlenwasserstoffgemischen ausgegangen wird, wie sie beispielsweise bei der Fischer-Tropsch-Synthese oder bei der Erdölaufbereitung als Fraktionen anfallen, stellen R und $R_2$ in Formel I und II auch derartige Gemische dar, beispielsweise das $C_{12}$- bis $C_{21}$-Kohlenwasserstoffgemisch aus $C_{12}$ 2%, $C_{13}$ 5%, $C_{14}$ 12%, $C_{15}$ 18%, $C_{16}$ 17%, $C_{17}$ 16%, $C_{18}$ 12%, $C_{19}$ 9%, $C_{20}$ 6%, und $C_{21}$ 3 Gew.-%, mit 47 Gew.-% an Naphthenen und 53 Gew.-% an Paraffinen.

Der mehrwertige Alkohol (Komponente A) der erfindungsgemässen Kühlflüssigkeit ist vorzugsweise Glycerin, ein Alkylenglykol mit 2 bis 4 C-Atomen und/oder ein Oxalkylenglykol aus der Gruppe von Diethylenglykol, Triethylenglykol, Dipropylenglykol und Tripropylenglykol.

Besonders bevorzugt ist Monoethylenglykol, Diethylenglykol, Monopropylenglykol und/oder Dipropylenglykol.

Die Komponente A bildet den Hauptbestandteil der neuen Kühlflüssigkeit. Die Menge beträgt im allgemeinen 87 bis 98 Gew.-%, vorzugsweise 92 bis 97 Gew.-%, bezogen auf das Gewicht der Flüssigkeit (Gesamtgewicht).

Da die erfindungsgemäss einzusetzenden Korrosionsinhibitoren (Komponente B) im allgemeinen auch pH-Wert-stabilisierend wirken, sind eigene Puffersubstanzen nicht mehr erforderlich. In der Regel wird eine Mischung aus den genannten Korrosionsinhibitoren verwendet. Ein bevorzugter Korrosionsinhibitor besteht im wesentlichen aus Alkalitetraborat in einer Menge von 0,5 bis 5 Gew.-%, Alkalibenzoat in einer Menge von 0,5 bis 5 Gew.-%, Alkalinitrit in einer Menge von 0,1 bis 0,6 Gew.-%, Alkalinitrat in einer von 0,05 bis 0,5 Gew.-%, Alkalisilicat in einer Menge von 0,01 bis 0,5 Gew.-% und Benztriazol in einer Menge von 0,01 bis 0,5 Gew.-%, Gewichtsprozent jeweils bezogen auf das Gewicht der Flüssigkeit.

Die Menge an Korrosionsinhibitor in der erfindungsgemässen Kühlflüssigkeit beträgt 2 bis 10 Gew.-%, vorzugsweise 3 bis 7 Gew.-%, bezogen auf das Gewicht der Flüssigkeit.

Die Menge an Kavitationsinhibitor (Komponente C) in der erfindungsgemässen Kühlflüssigkeit beträgt 0,01 bis 3 Gew.-%, vorzugsweise 0,05 bis 1 Gew.-%, insbesondere 0,1 bis 0,5 Gew.-%, bezogen auf das Gewicht der Flüssigkeit. Die Verbindungen gemäss Formel I sind bevorzugt.

Die erfindungsgemässe Kühlflüssigkeit kann zusätzlich zu den Komponenten A, B und C auch noch zweckmässige Additive, beispielsweise Antischaummittel, in wirksamer Mengen enthalten.

Als Antischaummittel kommen beispielsweise höhere aliphatische Alkohole, vorzugsweise einwertige Alkohole mit 8 bis 20 C-Atomen, beispielsweise iso-Octylalkohol, iso-Decylalkohol und iso-Tridecylalkohol in Betracht.

Die wirksame Menge liegt bei 0,01 bis 1 Gew.-%, bezogen auf das Gewicht der Flüssigkeit.

Um die Löslichkeit der Komponenten und der Additive zu erleichtern, können geringe Mengen Wasser zugesetzt werden. Die Menge an Wasser beträgt im allgemeinen 0,1 bis 1 Gew.-%, bezogen auf das Gewicht der Flüssigkeit.

Die Herstellung der erfindungsgemässen Kühlflüssigkeit erfolgt einfach durch Zusammenmischen der einzelnen Komponenten. Dies kann beispielsweise in einem mit Rührer ausgestatteten Behälter vorgenommen werden.

Die erfindungsgemässe Kühlflüssigkeit zeichnet sich durch eine überraschend hohe kavitations-

hemmende und korrosionshemmende Wirkung aus. Da die einzelnen Komponenten der Flüssigkeit miteinander verträglich sind, ist sie stabil auch bei relativ hohen und tiefen Temperaturen. Sie zeigt, insbesondere bei Verwendung von Antischaummitteln, geringe Schaumbildung.

Das erfindungsgemässe Kühlmittel ist vielseitig einsetzbar. Es wird vorzugsweise im Kühlkreislauf von Wärmekraftmaschinen und Pumpen, insbesondere von Verbrennungsmotoren eingesetzt. Dabei wird es zweckmässigerweise mit Wasser verdünnt, so dass es in einer Konzentration von 20 bis 45 Vol.-% vorliegt.

Die Erfindung wird nun durch die folgenden Beispiele noch näher erläutert.

In den Beispielen kamen die folgenden Verbindungen gemäss Komponente C) zum Einsatz:

1. $-SO_2-N-(CH_2)_5COOH$
   I
   $CH_3$

2. $-SO_2-N-(CH_2)_5COOH$
   I
   H

3. $R-SO_2-N-CH_2COONa$
   I
   H

4. $CH_3(CH_2)_{9-15}SO_2-N-CH_2COONa$
   I
   H

5. $CH_3(CH_2)_{12-17}-SO_2-N-(CH_2-CH_2O)_nH$ ,
   I
   $(CH_2-CH_2O)_mH$

wobei n und m = 8,

6. $CH_3(CH_2)_{12-17}-SO_2-N-(CH_2-CH_2O)_mH$ ,
   I
   $(CH_2-CH_2O)_mH$

wobei n und m = 6,

7. $CH_3(CH_2)_{12-17}-SO_2-N-(CH_2-CH_2O)_7H$ .
   I
   $CH_3$

In der Verbindungen Nr. 3 steht R für ein $C_{12-21}$-Kohlenwasserstoffgemisch aus $C_{12}$ 2%, $C_{13}$ 5%, $C_{14}$ 12%, $C_{15}$ 18%, $C_{16}$ 17%, $C_{17}$ 16%, $C_{18}$ 12%, $C_{19}$ 9%, $C_{20}$ 6% und $C_{21}$ 3 Gew.-%, wobei der Anteil an Naphthenen 47 Gew.-% und der an Paraffinen 53 Gew.-% beträgt.

*Beispiel 1*

Es wurde eine erfindungsgemässe Kühlflüssigkeit hergestellt durch Mischen der folgengen Komponenten:

94,90 Gew.-% Monoethylenglykol
1,50 Gew.-% Natriumtetraborat (mit 10 $H_2$)O)
3,00 Gew.-% Natriumbenzoat
0,05 Gew.-% Natriumsilicat
0,40 Gew.-% Natriumnitrit
0,05 Gew.-% Benztriazol
0,10 Gew.-% Verbindung Nr. 1.

*Beispiel 2*

Es wurde eine erfindungsgemässe Kühlflüssigkeit hergestellt durch Mischen der folgengen Komponenten:

93,12 Gew.-% Monoethylenglykol
3,00 Gew.-% Natriumtetraborat (mit 10 $H_2O$)
2,00 Gew.-% Natriumbenzoat
0,50 Gew.-% Natriumnitrit
0,30 Gew.-% Natriumnitrat
0,80 Gew.-% Natriumsilicat
1,00 Gew.-% Verbindung Nr. 2.

*Beispiel 3*

Es wurde eine erfindungsgemässe Kühlflüssigkeit hergestellt durch Mischen der folgengen Komponenten:

98,44 Gew.-% Diethylenglykol
1,00 Gew.-% Natriumtetraborat (mit 10 $H_2O$)
0,06 Gew.-% Benztriazol
0,50 Gew.-% Verbindung Nr. 3.

*Beispiele 4 bis 7*

Die Beispiele 4 bis 7 zeigen weitere erfindungsgemässe Kühlflüssigkeiten; die einzelnen Komponenten und ihre Anteile in Gewichtsprozent sind nachstehend zusammengefasst:

| Komponenten | Beispiel 4 | Beispiel 5 | Beispiel 6 | Beispiel 7 |
|---|---|---|---|---|
| Monoethylenglykol | 94,00 | — | — | 94,94 |
| Monopropylenglykol | — | 94,7 | — | — |
| Diethylenglykol | — | — | 95,94 | — |
| Korrosionsinhibitor | 5,92 | 5,0 | 3,06 | 4,26 |
| Komponente C) | 0,08 von Verbindung Nr. 4 | 0,3 von Verbindung Nr. 5 | 1,0 von Verbindung Nr. 6 | 0,8 von Verbindung Nr. 7 |

*Beispiele 8 = Vergleichsbeispiel*

Diese Kühlflüssigkeit bestand aus den Komponenten des Beispiels 1, jedoch ohne erfindungsgemässen Zusatz von Verbindung Nr. 1:

95,03 Gew.-% Monoethylenglykol
1,50 Gew.-% Natriumtetraborat (mit 10 $H_2$)O)
3,00 Gew.-% Natriumbenzoat
0,02 Gew.-% Natriumsilicat
0,40 Gew.-% Natriumnitrit
0,05 Gew.-% Benztriazol

Die Prüfung der Kühlflüssigkeiten nach den Beispielen 1 bis 8 auf ihre antikavitative Wirkung erfolgte nach den Vorschriften der Forschungsvereinigung Verbrennungskraftmaschinen E.V. Frankfurt/Main, Bundesrepublik Deutschland.

Diese Vorschriften sind in den Richtlinien zur «Prüfung der Eignung von Kühlmittelzusätzen für die Kühlflüssigkeiten von Verbrennungsmotoren», Heft R 315, Jahr 1977, beschrieben.

Entsprechend dieser Prüfmethode wurde die Gewichtsabnahme von Prüfkörpern aus der Aluminiumlegierung $AlCuMg_2$ gemessen. Je ein Prüfkörper wurde in der zu testenden Flüssigkeit in einer Ultraschallapparatur der Schwingungskavitation ausgesetzt, wobei die Schwingungsfrequenz 20 kHz ± 250 Hz und Amplitude der Schwingung am Prüfkörper 20 $\mu$m beträgt, und die Temperatur der Kühlflüssigkeit bei 80 ± 1 liegt.

Entsprechend den genannten Vorschriften wurden jeweils 4000 ml Flüssigkeit eingesetzt, die dadurch bereitet worden ist, dass die Kühlflüssigkeit gemäss den Beispielen 1 bis 8 mit Wasser 1 : 10 verdünnt wurde. Die Prüfkörper wurden achtmal hintereinander, nach jeweils 10 Minuten Behandlung in der genannten Ultraschallapparatur, gewogen. Die Auswertung der acht Wägungen pro Prüfkörper und pro Kühlflüssigkeit erfolgte ebenfalls nach den genannten Vorschriften:

Danach werden die ersten vier Wägungen nicht berücksichtigt. Von den restlichen vier Werten wird der höchste und der niedrigste Wert ebenfalls nicht berücksichtigt. Aus den verbleibenden zwei Werten wird das arithmetische Mittel gebildet. Dieser Gewichtswert, ausgedrückt in Milligramm pro Stunde, stellt das Testergebnis, nämlich die Gewichtsabnahme des Prüfkörpers, dar.

Nachstehend sind die Messergebnisse mit den Kühlflüssigkeiten gemäss den Beispielen 1 bis 8 zusammengefasst:

| Beispiel | 1 | 2 | 3 | 4 | 5 | 6 | 7 | 8 |
|---|---|---|---|---|---|---|---|---|
| Gewichtsabnahme des Prüfkörpers $AlCuMg_2$ in mg/h | 10,2 | 9,6 | 4,8 | 7,4 | 11,1 | 9,8 | 9,0 | 14,1 |

**Patentansprüche**

1. Korrosionsinhibierende und kavitationsinhibierende Kühlflüssigkeit aus mindestens einem mehrwertigen Alkohol aus der Gruppe von Glycerin, Alkylenglykolen mit 2 bis 6 C-Atomen und Oxalkylenglykolen des Oxethylens und/oder Oxpropylens mit insgesamt 4 bis 12 C-Atomen als Hauptbestandteil und aus mindestens einem Korrosionsinhibitor und mindestens einem Kavitationsinhibitor in einer jeweils wirksamen Menge dadurch gekennzeichnet, dass der Korrosionsinhibitor eine Verbindung aus der Gruppe der Alkaliborate, Alkalibenzoate, Alkalinitrite, Alkalinitrate, Alkalisilicate, Alkaliphosphate, Benztriazole und Alkanolamine und deren Salze ist und der Kavitations-inhibitor eine Verbindung der Formel I

$$\underset{\displaystyle R_1}{R\text{-}SO_2\text{-}\underset{|}{N}\text{-}(CH_2)_x\text{-}COOM}$$

worin bedeuten:

R einen Alkyl- oder Alkenylrest mit 4 bis 25 C-Atomen oder einen Arylrest mit 6 bis 10 C-Atomen,

$R_1$ Wasserstoff oder einen Alkylrest mit 1 bis 4 C-Atomen,

M Wasserstoff oder ein Alkalimetall, und

x eine ganze Zahl von 1 bis 5;

oder der Formel II

$$R_2\text{-}SO_2\text{-}N\begin{cases}(OR_3)_nH\\ R_4\end{cases}$$

worin bedeuten

$R_2$ einen Alkyl- oder Alkenylrest mit 4 bis 25 C-Atomen,

$R_3$ einen Alkylenrest mit 2 bis 4 C-Atomen,

n eine ganze Zahl von 1 bis 10,

$R_4$ Wasserstoff, einen Alkylrest mit 1 bis 4 C-Atomen oder einen Rest $-(OR_5)_mH$, worin $R_5$ ein Alkylenrest mit 2 bis 4 C-Atomen und m eine ganze Zahl von 1 bis 10 ist,

wobei die Menge an Korrosionsinhibitor 2 bis 10 Gew.-% und die Menge an Kavitationsinhibitor 0,01 bis 3,0 Gew.-% beträgt, Gewichtsprozente jeweils bezogen auf das Gewicht der Flüssigkeit.

2. Kühlflüssigkeit nach Anspruch 1, dadurch gekennzeichnet, dass R einen Alkylrest mit 8 bis 20 C-Atomen oder einen Arylrest aus der Gruppe von Phenyl, Benzyl, Phenethyl und Tolyl; $R_1$ Wasserstoff oder einen Alkylrest mit 1 bis 3 C-Atomen; M Wasserstoff, Natrium oder Kalium; $R_2$ einen Alkylrest mit 8 bis 20 C-Atomen; $R_3$ einen Ethylen- und/oder Propylenrest; n eine ganze Zahl von 2 bis 5; $R_4$ Wasserstoff, einen Alkylrest mit 1 bis 3 C-Atomen oder einen Rest $-(OR_5)_mH$ bedeutet, worin $R_5$ ein Ethylen- und/oder Propylenrest und m eine ganze Zahl von 2 bis 5 ist.

3. Kühlflüssigkeit nach Anspruch 1, dadurch gekennzeichnet, dass R einen Alkylrest mit 12 bis 18 C-Atomen oder den Phenylrest; $R_1$ Wasserstoff oder den Methylrest; M Wasserstoff, Natrium oder Kalium; $R_2$ einen Alkylrest mit 12 bis 18 C-Atomen; $R_3$ den Ethylenrest; $R_4$ Wasserstoff, den Methylrest oder einen Rest $-(OR_5)_mH$ bedeutet, worin $R_5$ der Ethylenrest und m eine ganze Zahl von 2 bis 5 ist.

4. Kühlflüssigkeit nach Anspruch 1, dadurch gekennzeichnet, dass die Menge an Kavitationsinhibitor 0,05 bis 1,0 Gew.-% beträgt.

**Claims**

1. A corrosion-inhibiting and cavitation-inhibiting cooling liquid consisting of at least one polyhydric alcohol, selected from the group comprising glycerol, alkylene glycols having from 2 to 6 carbon atoms and oxyalkylene glycols of oxyethylene and/or oxypropylene having a total of 4 to 12 carbon atoms as the main constituent, and of at least one corrosion inhibitor as well as one cavitation inhibitor, each of them being present in an effective amount, characterised in that the corrosion inhibitor is a compound seleced from the group consisting of alkali metal

borates, alkali metal benzoates, alkali metal nitrites, alkali metal nitrates, alkali metal silicates, alkali metal phosphates, benzotriazoles und alkanolamines and salts thereof, and the cavitation inhibitor is a compound of the formula I

$$R\text{-}SO_2\text{-}\underset{\substack{|\\ R_1}}{N}\text{-}(CH_2)_x\text{-}COOM$$

in which
R is an alkyl or alkenyl radical having 4 to 25 carbon atoms, or an aryl radical having 6 to 10 carbon atoms,
$R_1$ is hydrogen or an alkyl radical having 1 to 4 carbon atoms,
M is hydrogen or an alkali metal and
x is an integer from 1 to 5, or of the formula II

$$R_2\text{-}SO_2\text{-}N\begin{matrix}(OR_3)_nH\\ R_4\end{matrix}$$

in which
$R_2$ is an alkyl or alkenyl radical having 4 to 25 carbon atoms,
$R_3$ is an alkylene radical having 2 to 4 carbon atoms,
n is an integer from 1 to 10 and
$R_4$ is hydrogen, an alkyl radical having 1 to 4 carbon atoms or a radical $-(OR_5)_mH$, in which $R_5$ is an alkylene radical having 2 to 4 carbon atoms and m is an integer from 1 to 10,
the amount of the corrosion inhibitor being from 2 to 10 percent by weight and the amount of the cavitation inhibitor being from 0.01 to 3 percent by weight, percentages by weight being relative to the weight of the liquid.

2. A cooling liquid as claimed in claim 1, wherein R is an alkyl radical having 8 to 20 carbon atoms or an aryl radical selected from the group comprising phenyl, benzyl, phenethyl and tolyl, $R_1$ is hydrogen or an alkyl radical with 1 to 3 carbon atoms, M is hydrogen, sodium or potassium, $R_2$ is an alkyl radical having 8 to 20 carbon atoms, $R_3$ is an ethylene and/or propylene radical, n is an integer from 2 to 5 and $R_4$ is hydrogen, an alkyl radical having 1 to 3 carbon atoms or a radical $-(OR_5)_mH$, in which $R_5$ is an ethylene and/or propylene radical and m is an integer from 2 to 5.

3. A cooling liquid as claimed in claim 1, wherein R is an alkyl radical having 12 to 18 carbon atoms or the phenyl radical, $R_1$ is hydrogen or the methyl radical, M is hydrogen, sodium or potassium, $R_2$ is an alkyl radical having 12 to 18 carbon atoms, $R_3$ is the ethylene radical and $R_4$ is hydrogen, the methyl radical $-(OR_5)_mH$, in which $R_5$ is the ethylene radical and m is an integer from 2 to 5.

4. A cooling liquid as claimed in claim 1, wherein the amount of the cavitation inhibitor is 0.05 to 1 percent by weight.

**Revendications**

1. Liquide de refroidissement inhibiteur de corrosion et inhibiteur de cavitation qui est constitué d'au moins un polyol pris dans l'ensemble formé par le glycérol, les alkylène-glycols contenant de 2 à 6 atomes de carbone et les oxa-alkylène-glycols dérivant de l'oxyde d'éthylène et/ou de l'oxyde de propylène et contenant au total de 4 à 12 atomes de carbone, en tant que constituant principal, et d'au moins un inhibiteur de corrosion ainsi que d'au moins un inhibiteur de cavitation, chacun en une quantité efficace, et qui est caractérisé en ce que l'inhibiteur de corrosion est un composé pris dans l'ensemble constitué par les borates de métaux alcalins, les benzoates de métaux alcalins, les nitrites de métaux alcalins, les nitrates de métaux alcalins, les silicates de métaux alcalins, les phosphates de métaux alcalins, les benzotriazoles, les alcanolamines et leurs sels, et l'inhibiteur de cavitation est un composé répondant à la formule I:

$$R\text{-}SO_2\text{-}\underset{\substack{|\\ R_1}}{N}\text{-}(CH_2)_x\text{-}COOM \qquad (I)$$

dans laquelle:
r représente un radical alkyle ou alcényle contenant de 4 à 25 atomes de carbone, ou un radical aryle contenant de 6 à 10 atomes de carbone,
$R_1$ représente l'hydrogène ou un radical alkyle contenant de 1 à 4 atomes de carbone,
M représente l'hydrogène ou un métal alcalin et
x représente un nombre de 1 à 5,
ou à la formule II:

$$R_2\text{-}SO_2\text{-}N\begin{matrix}(OR_3)_nH\\ R_4\end{matrix} \qquad (II)$$

dans laquelle:
$R_2$ représente un radical alkyle ou alcényle contenant de 4 à 25 atomes de carbone,
$R_3$ représente un radical alkylène contenant de 2 à 4 atomes de carbone,
n représente un nombre entier de 1 à 10 et
$R_4$ représente l'hydrogène, un radical alkyle contenant de 1 à 4 atomes de carbone ou un radical $-(OR_5)_mH$ dans lequel $R_5$ représente un radical alkylène contenant de 2 à 4 atomes de carbone et m désigne un nombre entier de 1 à 10,
la quantité de l'inhibiteur de corrosion représentant de 2 à 10% en poids et la quantité de l'inhibiteur de cavitation de 0,01 à 3,0% en poids, à chaque fois par rapport au poids du liquide.

2. Liquide de refroidissement selon la revendication 1, caractérisé en ce que R représente un radical alkyle contenant de 8 à 20 atomes de carbone ou un radical aryle pris dans l'ensemble constitué par les radicaux phényle, benzyle, phényléthyle et tolyle; $R_1$ représente l'hydrogène ou un radical alkyle contenant de 1 à 3 atomes de carbone; M représente l'hydrogène, le sodium ou le potassium; $R_2$ représente un radical alkyle contenant de 8 à 20 atomes de carbone; $R_3$ représente un radical éthylène et/ou propylène; n représente un nombre entier de 2 à 5; $R_4$ re-

présente l'hydrogène, un radical alkyle contenant de 1 à 3 atomes de carbone ou un radical $-(OR_5)_mH$ dans lequel $R_5$ représente un radical éthylène et/ou propylène et m un nombre entier de 2 à 5.

3. Liquide de refroidissement selon la revendication 1, caractérisé en ce que R représente un radical alkyle contenant de 12 à 18 atomes de carbone ou un radical phényle; $R_1$ représente l'hydrogène ou un radical méthyle; M représente l'hydrogène, le sodium ou le potassium; $R_2$ représente un radical alkyle contenant de 12 à 18 atomes de carbone; $R_2$ représente un radical éthylène; $R_4$ représente l'hydrogène, un radical méthyle ou un radical $-(OR_5)_mH$ dans lequel $R_5$ représente un radical éthylène et m un nombre entier de 2 à 5.

4. Liquide de refroidissement selon la revendication 1, caractérisé en ce que la quantité de l'inhibiteur de cavitation est comprise entre 0,05 et 1,0% en poids.